(19) Europäisches Patentamt
European Patent Office
Office européen des brevets

(11) **EP 0 927 438 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.⁷: **H01Q 7/00**, H04B 1/48, G08B 3/10

(21) Anmeldenummer: **97939956.5**

(22) Anmeldetag: **16.08.1997**

(86) Internationale Anmeldenummer:
**PCT/DE97/01763**

(87) Internationale Veröffentlichungsnummer:
**WO 98/12773 (26.03.1998 Gazette 1998/12)**

(54) **ANTENNENANORDNUNG MIT KAPAZITIV ABSTIMMBAREM RAHMEN UND FUNKRUFEMPFÄNGER**

ANTENNA ARRANGEMENT WHICH CAN BE TUNED CAPACITIVELY AND PAGER

ENSEMBLE ANTENNE AVEC CADRE ACCORDABLE PAR EFFET CAPACITIF ET RECEPTEUR D'APPEL

(84) Benannte Vertragsstaaten:
**CH DE ES FR GB IT LI**

(30) Priorität: **20.09.1996 DE 19638597**

(43) Veröffentlichungstag der Anmeldung:
**07.07.1999 Patentblatt 1999/27**

(73) Patentinhaber: **ROBERT BOSCH GMBH**
**70442 Stuttgart (DE)**

(72) Erfinder: **BOY, Dierk**
**D-30173 Hannover (DE)**

(56) Entgegenhaltungen:
| | |
|---|---|
| **DE-A- 2 362 889** | **DE-U- 9 201 543** |
| **FR-A- 2 636 781** | **US-A- 3 588 905** |
| **US-A- 4 625 212** | **US-A- 4 647 937** |
| **US-A- 5 225 847** | |

## Beschreibung

Stand der Technik

Die Erfindung geht von einer Antennenanordnung zum Senden und Empfangen von Funksignalen aus.

Aus der US 4,647,937 A ist bereits eine Antennenvorrichtung bekannt, die eine erste Antennenschleife, eine veränderbare Kapazität zur Anpassung der Antennenschleife an die Rundfunkfrequenz und einen Verstärker für das empfangene Signal umfaßt. Weiterhin ist eine zweite Antennenschleife vorgesehen, die eine zweite veränderbare Kapazität umfaßt, wobei die erste veränderbare Kapazität und die zweite veränderbare Kapazität über ein gemeinsames Bedienelement eingestellt werden können. Die erste Antennenschleife ist über den Verstärker mit einem Auswahlschalter verbunden. Die zweite Antennenschleife ist über Zuleitungen direkt mit dem Auswahlschalter verbunden. Durch den Auswahlschalter ist entweder der Ausgang des Verstärkers oder die Zuleitung der zweiten Antennenschleife mit einem Ausgangsanschluß verbindbar. Je nach Empfangsqualität der Rundfunkwellen wird die erste Antennenschleife über den Verstärker oder die zweite Antennenschleife über die Zuleitung mit dem Ausgangsanschluß verbunden.

Aus der US 4,625,212 A ist eine Antenne für einen Funkrufempfänger ein sogenannter Pager bekannt, die einen kapazitiv abstimmbaren Rahmen umfaßt.

Aus der US 5,225,847 A ist ein automatisches Tuningsystem für eine Antenne bekannt, die ein einzelnes veränderbares Reaktanzelement umfaßt. Die Leistung, die zur Antenne übertragen wird, und die Leistung, die von der Antenne auf einer Speiseleitung reflektiert wird, werden gemessen. Es ist eine Speiseschleife vorgesehen, die über die Speiseleitung mit einem Sendeempfänger verbunden ist. Der Sendeempfänger kann in einem Sendemodus oder in einem Empfangsmodus betrieben werden. Im Sendemodus überträgt der Sendeempfänger ein Signal zur Speiseschleife, das von der Antenne abgestrahlt werden soll.

Aus der FR 2 636 781 A ist eine Rahmenantenne bekannt, die dazu bestimmt ist, ein erstes Signal abzustrahlen und ein zweites Signal als Echo zu empfangen. Die Rahmenantenne umfaßt ein Anschlußklemmenpaar, das sowohl zur Einspeisung des ersten Signals als auch zur Entnahme des zweiten Signals dient.

Aus der DE-23 62 889 A ist ein Funk- Sende/ Empfangsgerät bekannt, das eine Schaltungsanordnung zum kontaktlosen, wahlweisen Verbinden der Antenne mit dem Empfänger oder dem Sender aufweist. Die Schaltungsanordnung besteht aus je einem zwischen der Antenne und dem Sender und zwischen der Antenne und dem Empfänger liegenden steuerbaren Scheinwiderstandsnetzwerk, das für das Betriebsfrequenzband durchlässig ist, und je einem den Scheinwiderstandsnetzwerken zugeordneten elektronischen Schalter. Durch die Betätigung des elektronischen Schalters wird das Scheinwiderstandsnetzwerk elektrisch derart in seiner Grenzfrequenz verändert, daß das Scheinwiderstandsnetzwerk für das Betriebsfrequenzband undurchlässig ist.

Vorteile der Erfindung

Die erfindungsgemäße Antennenanordnung mit den Merkmalen des unabhängigen Anspruchs 1 hat demgegenüber den Vorteil, daß eine Antennenumschaltung bei Wechselsprechen nicht erforderlich ist, so daß Schaltungsaufwand, Platz und Kosten eingespart werden können.

Vorteilhaft ist außerdem, daß auch bei Gegensprechen im Duplex-Betrieb keine aufwendigen Hoch- und/oder Tiefpaßweichen erforderlich sind.

Durch die in den Unteransprüchen aufgeführten Maßnahmen sind vorteilhafte Weiterbildungen und Verbesserungen der im unabhängigen Anspruch 1 angegebenen Antennenanordnung möglich.

Vorteilhaft ist dabei eine induktive Auskopplung der empfangenen Signale von dem Rahmen in die Empfangsstufe über eine Koppelschleife. Auf diese Weise wird bei Funkgeräten, die normalerweise im Falle der Empfangsbereitschaft am menschlichen Körper getragen werden, bei entsprechender Ausrichtung der Antenne möglichst senkrecht auf dem menschlichen Körper nur eine geringe kapazitive Belastung durch den menschlichen Körper auftreten.

Vorteilhaft ist auch die Ausbildung des Rahmens als Rechteckrahmen, wobei an einer Seite des Rahmens der Einspeisepunkt und an der gegenüberliegenden Seite ein Abstimmkondensator jeweils mittig angeordnet ist. Wird bei induktiver Auskopplung die Koppelschleife symmetrisch zu einer durch den Abstimmkondensator und den Einspeisepunkt verlaufenden Achse des Rahmens angeordnet bzw. werden bei kapazitiver Auskopplung die Auskoppelkondensatoren symmetrisch zu der durch den Abstimmkondensator und den Einspeisepunkt verlaufenden Achse des Rahmens angeordnet, so wird ein Übersprechen im Sendebetrieb bei symmetrischem oder symmetrierten Eingang der Empfangsstufe verhindert.

Vorteilhaft ist auch die Aufbringung des Rahmens als Leiterbahn auf Leiterplattenmaterial. Auf diese Weise kann die Antenne kostengünstig auf Leiterplattenmaterial gedruckt werden.

Von Vorteil ist weiterhin, daß ein zu sendendes Signal dem Einspeisepunkt galvanisch getrennt vorzugsweise unter Verwendung eines Übertragers zuführbar ist. Auf diese Weise wird die Belastung des Rahmens durch die Sendeeinrichtung verringert.

Von Vorteil ist weiterhin, ein zu sendendes Signal dem Einspeisepunkt über einen Verlängerungsleiter zuzuführen. Auf diese Weise kann die mechanische Länge der Antenne ohne nennenswerten Aufwand an eine entsprechend gewünschte Sendewellenlänge angepaßt werden.

Vorteilhaft ist ein Pager nach Anspruch 13, der eine Antennenanordnung nach einem der vorherigen Ansprüche umfaßt. Ist die Antennenanordnung integraler Bestandteil des Pagers, so wird Platz eingespart.

Zeichnung

Ausführungsbeispiele der Erfindung sind in der Zeichnung dargestellt und in der nachfolgenden Beschreibung näher erläutert. Es zeigen Figur 1 eine erfindungsgemäße Antennenanordnung mit induktiver Auskopplung in einer prinzipiellen Ausführungsform, Figur 2 und Figur 3 je eine Realisierungsform der erfindungsgemäßen Antennenanordnung mit induktiver Auskopplung, Figur 4 eine erfindungsgemäße Antennenanordnung mit Symmetrierung des Eingangs einer Empfangsstufe und Figur 5 eine erfindungsgemäße Antennenanordnung mit kapazitiver Auskopplung.

Beschreibung des Ausführungsbeispiels

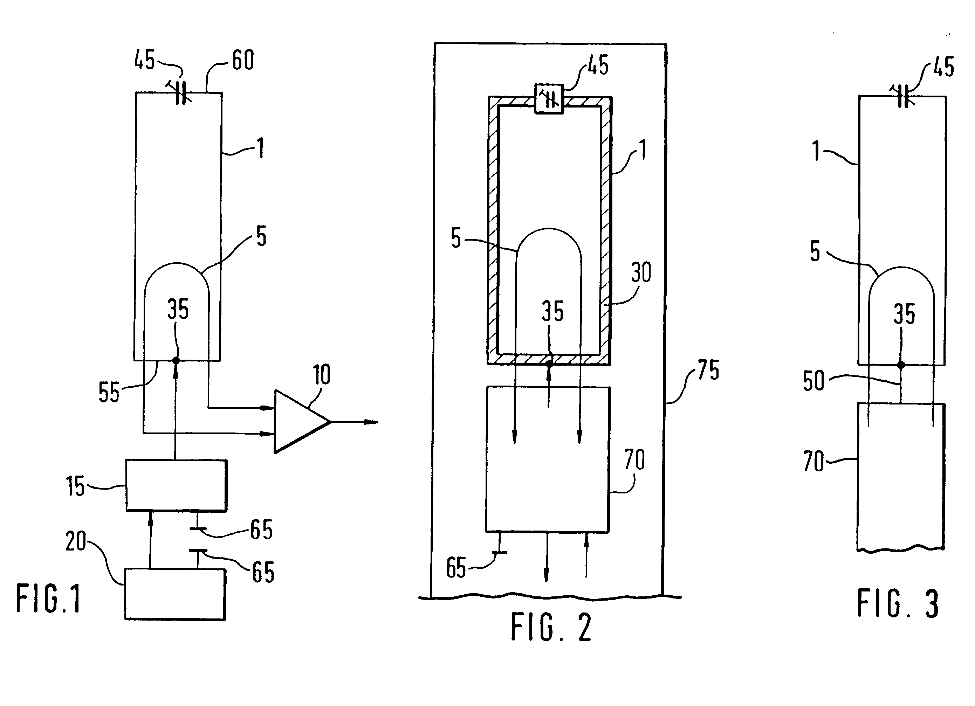

In Figur 1 kennzeichnet 1 einen metallischen Rahmen, der als Rechteckrahmen ausgebildet ist. An einer ersten Schmalseite 55 des Rahmens 1 befindet sich in der Mitte dieser Schmalseite 55 ein Einspeisepunkt 35. Auf der der ersten Schmalseite 55 gegenüberliegenden zweiten Schmalseite 60 des Rahmens 1 befindet sich in der Mitte der zweiten Schmalseite 60 ein Abstimmkondensator 45. Eine Koppelschleife 5 ragt U-förmig an der ersten Schmalseite 55 des Rahmens 1 in den Rahmen 1 so hinein, daß sie symmetrisch zu einer durch den Abstimmkondensator 45 und den Einspeisepunkt 35 verlaufenden Achse des Rahmens 1 angeordnet ist. Die beiden Ausgänge der Koppelschleife 5 sind einer Empfangsstufe 10 zugeführt, die mit weiteren nicht dargestellten Empfangseinrichtungen verbunden ist. Mit dem Einspeisepunkt 35 ist ein Anpaßnetzwerk 15 verbunden, das einerseits an ein Bezugspotential 65 und andererseits an eine Sendeeinrichtung 20 angeschlossen ist, wobei die Sendeeinrichtung 20 ebenfalls mit dem Bezugspotential 65 verbunden ist.

Der Rahmen 1 dient als Antenne zum Senden und Empfangen von Funksignalen. Im Empfangsfall kann die Empfangsfrequenz über den Abstimmkondensator 45, der beispielsweise als Trimmerkondensator ausgebildet sein kann, in Resonanz gebracht werden. Die Auskopplung auf die Empfangsstufe 10 erfolgt induktiv symmetrisch über die Koppelschleife 5, wobei der Eingang der Empfangsstufe 10 ebenfalls symmetrisch ist. Von der Empfangsstufe 10 werden die empfangenen Funksignale an die weiteren nicht dargestellten Empfangseinrichtungen abgegeben. Die beschriebene Antennenanordnung kann beispielsweise in Funkgeräten eingesetzt werden, die normalerweise im Falle der Empfangsbereitschaft am menschlichen Körper getragen werden. Der menschliche Körper stellt dabei eine kapazitive Belastung für die beschriebene magnetische Antenne dar, wobei die Belastung am geringsten ist, wenn diese richtungsabhängige Antenne senkrecht auf dem menschlichen Körper steht. Induktive, d. h. magnetische Empfangsantennen werden vornehmlich in Rufempfängern bzw. Pagern verwendet. Durch die erfindungsgemäße Antennenanordnung kann mit einem solchen Rufempfänger auch gesendet werden, wozu das Gerät im allgemeinen in die Hand genommen wird. Die Eigenschaften der beschriebenen Antennenanordnung für den Empfangsfall ändern sich dabei kaum.

Im Sendefall wird die Antenne über das Anpaßnetzwerk 15 wie ein gegebenenfalls verkürzter $\frac{\lambda}{4}$-Strahler mit dem die Gerätemasse darstellenden Bezugspotential 65 als Gegengewicht betrieben. Die zu sendenden Signale werden dabei von der Sendeeinrichtung 20 über das Anpaßnetzwerk 15 auf den Einspeisepunkt 35 gegeben und dort in zwei zueinander gegenläufige Signale aufgeteilt, die dann von dem Rahmen 1 abgestrahlt werden. Der Rahmen 1 wirkt im Sendefall als Dipolhälfte, so daß in den beiden durch die durch den Einspeisepunkt 35 und den Abstimmkondensator 45 verlaufende Symmetrieachse getrennten Rahmenteilen kein Strom fließt und sich in jeder Rahmenhälfte das gleiche Potential ausbildet. Da in den beiden Rahmenhälften kein Strom fließt, werden die Sendesignale nur kapazitiv auf die Koppelschleife 5 ausgekoppelt, wobei die ausgekoppelten Signale aufgrund der Potentialgleichheit gleichphasig sind. Sie löschen sich somit in der Empfangsstufe 10 aus, so daß kein Übersprechen durch die Sendesignale erfolgt. Dadurch kann bei Wechselsprechen bzw. Halbduplex die Antennenumschaltung entfallen und bei Gegensprechen bzw. Duplex können die ansonsten erforderlichen aufwendigen Hoch- und/oder Tiefpaßweichen entfallen bzw. erheblich einfacher ausgeführt werden. Wird der Abstimmkondensator 45 und der Einspeisepunkt 35 nicht mittig an den beiden Schmalseiten 55 und 60 angebracht und/oder die Koppelschleife 5 nicht in der beschriebenen Weise symmetrisch in den Rahmen 1 gelegt, so ergeben sich auf den beiden Rahmenhälften Signale mit unterschiedlichem Potential, wobei wiederum kein Strom in den beiden Rahmenhälften fließt, so daß der Empfangsstufe 10 nach kapazitiver Auskopplung der Sendesignale vom Rahmen 1 auf die Koppelschleife 5 ebenfalls Signale mit unterschiedlichem Potential zugeführt werden, die in der Empfangsstufe 10 nicht kompensiert werden können, so daß Übersprechen die Folge ist. Zur Kompensation der in diesem Fall der Empfangsstufe 10 zugeführten ausgekoppelten Sendesignale ist dann zwischen die Koppelschleife 5 und die Empfangsstufe 10 ein geeignetes Transformationsnetzwerk zu schalten.

In Figur 2 ist eine Realisierungsform der in Figur 1 noch prinzipiell dargestellten Antennenanordnung dargestellt. Dabei ist der Rahmen 1 als Leiterbahn 30 ausgebildet und auf ein Leiteplattenmaterial 75 aufgebracht. Bei der Ausführungsform gemäß Figur 2 sind das Anpaßnetzwerk 15 und die Empfangsstufe 10 in einer Sende-/Empfangsanpassung 70 integriert, von der empfangene Signale an weitere Empfangseinrichtungen abgegeben und der zu sendende Signale von einer Sendeeinrichtung zugeführt werden, wobei die weiteren Empfangseinrichtungen und die Sendeeinrichtung in Figur 2 nicht dargestellt sind, sondern nur die Zu- bzw. Abführung der Signale durch entsprechende Pfeile markiert ist. Die Sende-/Empfangsanpassung 70 ist außerdem mit dem Bezugspotential 65 verbunden. Die Funktionsweise der Antennenanordnung nach Figur 2 entspricht der Funktionsweise der Antennenanordnung gemäß Figur 1. In Figur 2 sind auch die Sende-/Empfangsanpassung 70 und gegebenenfalls die weiteren Empfangseinrichtungen und die Sendeeinrichtung auf dem Leiterplattenmaterial 75 aufgebracht, so daß auf diese Weise Platz eingespart werden kann und die Antennenanordnung zusammen mit den Sende- und Empfangseinrichtungen platzsparend im Gehäuse eines Funkgerätes bzw. eines Pagers integriert werden kann.

Gemäß Figur 3 ist es jedoch auch möglich, die Antennenanordnung vom Gehäuse des Funkgerätes bzw. des Pagers zu trennen, wobei die Sende-/Empfangsanpassung 70 im Gehäuse integriert bleibt. Der Rahmen 1 kann dann beispielsweise eine rechteckig ausgebildete Schleife aus Kupferband sein. In Figur 3 ist weiterhin durch das Bezugszeichen 50 ein beispielsweise als Verlängerungsrohr ausgebildeter Verlängerungsleiter dargestellt, durch den die mechanische Länge der Antenne zwischen dem Einspeisepunkt 35 und dem Anpaßnetzwerk 15 bzw. der Sende-/Empfangsanpassung 70 an eine entsprechend gewünschte Sendewellenlänge angepaßt werden kann.

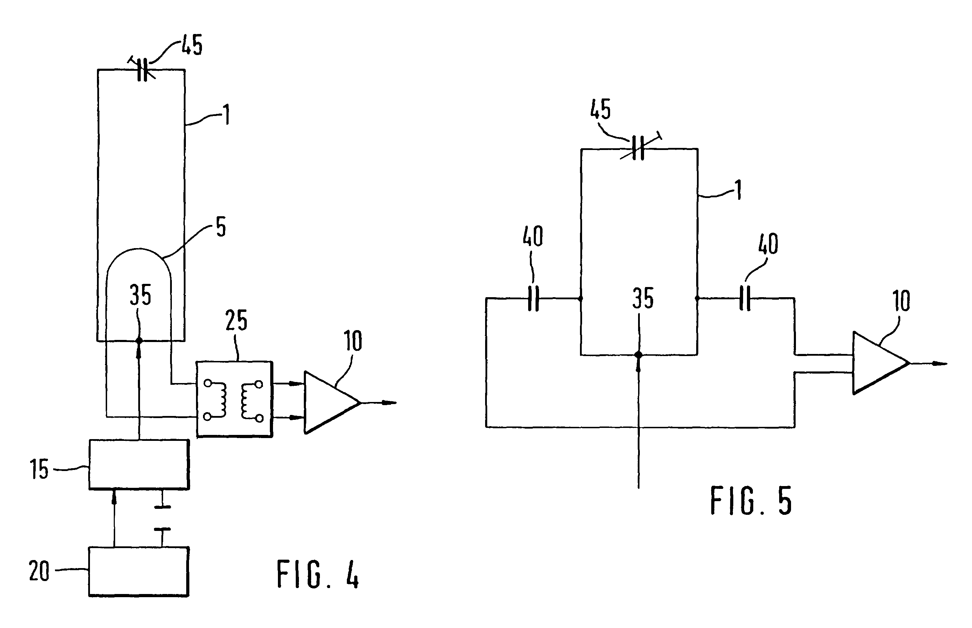

In Figur 4 ist die Antennenanordnung gemäß Figur 1 dargestellt, wobei die Empfangsstufe 10 keinen symmetrischen Eingang aufweist. Zur Symmetrierung des Eingangs der Empfangsstufe 10 ist zwischen die Empfangsstufe 10 und die Koppelschleife 5 ein Transformationsnetzwerk 25 vorzugsweise unter Verwendung von Übertragern und/oder Phasenschiebern geschaltet.

In Figur 5 ist eine Antennenanordnung dargestellt, bei der die Auskopplung der empfangenen Signale von dem Rahmen 1 in die Empfangsstufe 10 kapazitiv über mit dem Rahmen 1 verbundene Auskoppelkondensatoren 40 erfolgt. Der Rahmen 1 ist dabei nach wie vor rechteckförmig ausgebildet und der Einspeisepunkt 35 und der Abstimmkondensator 45 sind, wie bei Figur 1 beschrieben, am Rahmen 1 angeordnet. Dabei ist an jede der beiden Längsseiten des Rahmens 1 jeweils ein Auskoppelkondensator 40 angeschlossen, wobei die Anschlußpunkte für die Auskoppelkondensatoren 40 symmetrisch zu der durch den Abstimmkondensator 45 und den Einspeisepunkt 35 verlaufenden Achse des Rahmens 1 angeordnet sind. Die Auskoppelkondensatoren 40 sind außerdem mit ihrer nicht an den Rahmen 1 angeschlossenen Elektrode an die Empfangsstufe 10 angeschlossen.

Im Empfangsfall werden die vom Rahmen 1 empfangenen Signale kapazitiv über die Auskoppelkondensatoren 40 ausgekoppelt und der Empfangsstufe 10 zugeführt.

Im Sendefall werden die Sendesignale am Einspeisepunkt 35 wieder in zwei zueinander gegenläufige Signale mit gleichem Potential aufgeteilt, wobei aufgrund der ebenfalls symmetrischen Anordnung der Auskoppelkondensatoren 40 und dem symmetrischen bzw. gegebenenfalls zu symmetrierenden Eingang der Empfangsstufe 10 ein Übersprechen durch die Sendesignale auf die Empfangseinrichtungen verhindert wird.

In einem weiteren Ausführungsbeispiel kann ein zu sendendes Signal dem Einspeisepunkt 35 galvanisch getrennt, beispielsweise unter Verwendung eines Übertragers oder auch kapazitiv zugeführt werden, wodurch die Belastung des Rahmens 1 durch das Anpaßnetzwerk 15 und die Sendeeinrichtung 20 verringert wird. Dabei kann sich der Übertrager oder die kapazitive Zuführung zwischen dem Einspeisepunkt 35 und dem Anpaßnetzwerk 15 oder auch im Anpaßnetzwerk 15 selbst befinden.

**Patentansprüche**

1. Antennenanordnung zum Senden und Empfangen von Funksignalen mit einem kapazitiv abstimmbaren Rahmen (1), von dem empfangene Funksignale symmetrisch in eine Empfangsstufe (10) einkoppelbar sind, wobei der kapazitiv abstimmbare Rahmen (1) einen Einspeisepunkt (35) aufweist, an dem ein von dem Rahmen (1) abzustrahlendes Signal in zwei zueinander gegenläufige Signale mit insbesondere gleichem Potential aufteilbar ist.

2. Antennenanordnung nach Anspruch 1, dadurch gekennzeichnet, daß die Auskopplung der empfangenen Signale von dem Rahmen (1) in die Empfangsstufe (10) induktiv über eine Koppelschleife (5) erfolgt.

3. Antennenanordnung nach Anspruch 1, dadurch gekennzeichnet, daß die Auskopplung der empfangenen Signale von dem Rahmen (1) in die Empfangsstufe (10) kapazitiv über mit dem Rahmen (1) verbundene Auskoppelkondensatoren (40) erfolgt (Fig. 5).

4. Antennenanordnung nach Anspruch 1, 2 oder 3, dadurch gekennzeichnet, daß der Rahmen (1) als Rechteckrahmen ausgebildet ist, wobei an einer Seite des Rahmens (1) der Einspeisepunkt (35) und an der gegenüberliegenden Seite ein Abstimmkondensator (45) jeweils mittig angeordnet ist.

5. Antennenanordnung nach Anspruch 2 und 4, dadurch gekennzeichnet, daß die Koppelschleife (5) symmetrisch zu einer durch den Abstimmkondensator (45) und den Einspeisepunkt (35) verlaufenden Achse des Rahmens (1) angeordnet ist.

6. Antennenanordnung nach Anspruch 3 und 4, dadurch gekennzeichnet, daß die Auskoppelkondensatoren (40) symmetrisch zu der durch den Abstimmkondensator (45) und den Einspeisepunkt (35) verlaufenden Achse des Rahmens (1) angeordnet sind (Fig.5).

7. Antennenanordnung nach einem der vorherigen Ansprüche, dadurch gekennzeichnet, daß die Empfangsstufe (10) einen symmetrischen Eingang aufweist.

8. Antennenanordnung nach einem der Ansprüche 1 bis 6, dadurch gekennzeichnet, daß zur Symmetrierung des Eingangs der Empfangsstufe (10) zwischen die Empfangsstufe (10) und die Koppelschleife (5) ein Transformationsnetzwerk (25) vorzugsweise unter Verwendung von Übertragern und/ oder Phasenschiebern geschaltet ist.

9. Antennenanordnung nach einem der vorherigen Ansprüche, dadurch gekennzeichnet, daß der Rahmen (1) eine Schleife aus Kupferband ist.

10. Antennenanordnung nach einem der Ansprüche 1 bis 8, dadurch gekennzeichnet, daß der Rahmen (1) als Leiterbahn (30) auf Leiterplattenmaterial (75) aufgebracht ist.

11. Antennenanordnung nach einem der vorherigen Ansprüche, dadurch gekennzeichnet, daß ein zu sendendes Signal dem Einspeisepunkt (35) galvanisch getrennt vorzugsweise unter Verwendung eines Übertragers zuführbar ist.

12. Antennenanordnung nach einem der vorherigen Ansprüche, dadurch gekennzeichnet, daß ein zu sendendes Signal dem Einspeisepunkt (35) über einen Verlängerungsleiter (50) vorzugsweise ein Verlängerungsrohr zuführbar ist.

13. Pager, der eine Antennenanordnung nach einem der Ansprüche 1 bis 12 umfaßt.

**Claims**

1. Antenna arrangement for transmitting and receiving radio signals, having a capacitively tunable frame (1) from which received radio signals can be coupled symmetrically into a receiving stage (10), the capacitively tunable frame (1) having a feed-in point (35) at which a signal to be emitted by the frame (1) can be split into two signals of opposite direction having, in particular, the same potential.

2. Antenna arrangement according to Claim 1, characterized in that the received signals are decoupled from the frame (1) into the receiving stage (10) inductively via a coupling loop (5).

3. Antenna arrangement according to Claim 1, characterized in that the received signals are decoupled from the frame (1) into the receiving stage (10) capacitively via decoupling capacitors (40) connected to the frame (1) (Fig. 5).

4. Antenna arrangement according to Claim 1, 2, or 3, characterized in that the frame (1) is constructed as a rectangular frame, the feed-in point (35) being arranged on one side of the frame (1) and a tuning capacitor (45) being arranged on the opposite side, in the middle in each case.

5. Antenna arrangement according to Claims 2 and 4, characterized in that the coupling loop (5) is arranged symmetrically relative to an axis of the frame (1) running through the tuning capacitor (45) and the feed-in point (35).

6. Antenna arrangement according to Claim 3 and 4, characterized in that the decoupling capacitors (40) are arranged symmetrically relative to the axis of the frame (1) running through the tuning capacitor (45) and the feed-in point (35) (Fig. 5).

7. Antenna arrangement according to one of the preceding claims, characterized in that the receiving stage (10) has a symmetrical input.

8. Antenna arrangement according to one of Claims 1 to 6, characterized in that in order to balance the input of the receiving stage (10) a transformation network (25) is connected between the receiving stage (10) and the coupling loop (5), preferably using transfomers and/or phase shifters.

9. Antenna arrangement according to one of the preceding claims, characterized in that the frame (1) is a loop made from copper strip.

10. Antenna arrangement according to one of Claims 1 to 8, characterized in that the frame (1) is applied as a conductor track (30) to printed circuit board material (75).

11. Antenna arrangement according to one of the preceding claims, characterized in that a signal to be transmitted can be fed to the feed-in point (35) in an electrically isolated fashion, preferably using a transformer.

**12.** Antenna arrangement according to one of the preceding claims, characterized in that a signal to be transmitted can be fed to the feed-in point (35) via an extension conductor (50), preferably an extension tube.

**13.** Pager which comprises an antenna arrangement according to one of Claims 1 to 12.

**Revendications**

**1.** Montage d'antenne pour émettre et recevoir des signaux radio avec un cadre (1) accordé de manière capacitive, et qui injecte des signaux radio reçus, de manière symétrique, dans un étage de réception (10),
le cadre (1) accordé de manière capacitive comporte un point d'alimentation (35) qui divise le signal à émettre par le cadre (1), en deux signaux opposés ayant notamment le même potentiel.

**2.** Montage d'antenne selon la revendication 1,
caractérisé en ce que
le découplage des signaux reçus par le cadre (1) vers l'étage de réception (10), se fait de manière inductive par une boucle de couplage (5).

**3.** Montage d'antenne selon la revendication 1,
caractérisé en ce que
le découplage des signaux reçus par le cadre (1) vers l'étage de réception (10) se fait de manière capacitive par des condensateurs de découplage (40) reliés au cadre (1).

**4.** Montage d'antenne selon les revendications 1, 2, 3,
caractérisé en ce que
le cadre (1) est un cadre rectangulaire, un côté du cadre (1) comportant l'alimentation (35) en son milieu, et le milieu du côté opposé comportant un condensateur d'accord (45).

**5.** Montage d'antenne selon les revendications 2 et 4,
caractérisé en ce que
la boucle de couplage (5) est symétrique par rapport à l'axe du cadre (1) passant par le condensateur d'accord (45) et le point d'alimentation (35).

**6.** Montage d'antenne selon les revendications 3 et 4,
caractérisé par
des condensateurs de découplage (40) montés de manière symétrique par rapport à l'axe du cadre (1) passant par le condensateur d'accord (45) et le point d'alimentation (35).

**7.** Montage d'antenne selon l'une quelconque des revendications précédentes,
caractérisé en ce que
l'étage d'entrée (10) a une entrée symétrique.

**8.** Montage d'antenne selon l'une quelconque des revendications 1 à 6,
caractérisé en ce que
l'entrée de l'étage de réception (10) est rendue symétrique par un réseau de transformation (25) constitué de préférence par des transformateurs et/ou des déphaseurs entre l'étage d'entrée (10) et la boucle de couplage (5).

**9.** Montage d'antenne selon l'une quelconque des revendications précédentes,
caractérisé en ce que
le cadre (1) est une boucle formée par un ruban de cuivre.

**10.** Montage d'antenne selon l'une quelconque des revendications 1 à 8,
caractérisé en ce que
le cadre (1) est un chemin conducteur (30) réalisé sur un circuit imprimé (75).

**11.** Montage d'antenne selon l'une quelconque des revendications précédentes,
caractérisé en ce que
le signal à émettre est appliqué au point d'alimentation (35) par une séparation galvanique, de préférence en utilisant un transformateur.

**12.** Montage d'antenne selon l'une quelconque des revendications précédentes,
caractérisé en ce que
le signal à émettre est appliqué au point d'alimentation (35) par un conducteur prolongateur (50), de préférence un tube prolongateur.

**13.** Pager comportant un montage d'antenne selon l'une quelconque des revendications 1 à 12.

FIG.1

FIG. 2

FIG. 3

EP 0 927 438 B1

FIG. 5

FIG. 4

8